# FASCICULE DE BREVET EUROPEEN

(11) **EP 1 978 517 B1**
(45) Date de publication et mention de la délivrance du brevet: **12.05.2010**
(21) Numéro de dépôt: 08103329.2
(22) Date de dépôt: 02.04.2008
(51) Int. Cl.: G11B 7/257

(54) **Support d'enregistrement optique en super-resolution**
Optischer Datenträger mit Superauflösung
Super-resolution optical recording medium

(30) Priorité: 06.04.2007 FR 0702561
(43) Date de publication de la demande: 08.10.2008
(73) Titulaire: Commissariat à l'Energie Atomique, 75015 Paris (FR)
(72) Inventeur: Hyot, Bérangère, 38320 EYBENS (FR); Andre, Bernard, 38950 QUAIX EN CHARTREUSE (FR); Desre, Pierre, 38240 MEYLAN (FR); Biquard, Xavier, 38210 TULLINS (FR)
(74) Mandataire: Guérin, Michel

(56) Documents cités:
- JP-A- 3 292 632
- JP-A- 7 029 206
- US-A- 5 949 751
- US-A1- 2003 002 428
- US-A1- 2005 254 408

## Description

L'invention concerne le domaine de l'enregistrement optique d'informations.

Lorsqu'on cherche à accroître la densité d'informations enregistrées sur un disque optique, on est en général limité par les performances du dispositif de lecture des informations. Le principe de base est que l'on ne peut que très difficilement lire des informations physiques inscrites dans le disque si leur dimension est inférieure à la limite de résolution du système optique qui servira à lire ces informations. Typiquement, avec une lecture par un laser rouge de longueur d'onde 650nm et une ouverture numérique de 0,6 on ne peut normalement pas espérer lire correctement des informations de dimension inférieure à 0,4 micromètre, à la rigueur 0,3 micromètre.

Cependant, des méthodes dites de super-résolution ont été imaginées pour lire des informations dont la dimension physique est inférieure, voire même très inférieure, à la longueur d'onde. Ces méthodes se fondent sur les propriétés optiques non-linéaires de certains matériaux. Par propriétés non-linéaires, on entend le fait que certaines propriétés optiques du matériau changent en fonction de l'intensité de la lumière qu'ils reçoivent. Le laser de lecture lui-même va modifier localement les propriétés optiques du matériau par des effets thermiques, optiques, thermo-optiques et/ou optoélectroniques sur des dimensions plus petites que la dimension du spot laser de lecture ; du fait du changement de propriété, une information présente dans ce très petit volume devient détectable alors qu'elle n'aurait pas été détectable sans ce changement.

Le phénomène qu'on exploite est fondé principalement sur deux propriétés du laser de lecture qu'on va utiliser :
- d'une part le laser est focalisé très fortement de manière à présenter une section extrêmement petite (de l'ordre de la longueur d'onde) mais dont la distribution de puissance est gaussienne, très forte en son centre, très atténuée à la périphérie,
- et d'autre part, on choisit une puissance de laser de lecture telle que la densité de puissance sur une petite partie de la section, au centre du faisceau, modifie significativement une propriété optique de la couche, alors que la densité de puissance en dehors de cette petite portion de section ne modifie pas significativement cette propriété optique ; la propriété optique est modifiée dans un sens tendant à permettre la lecture d'une information qui ne serait pas lisible sans cette modification.

Par exemple, la propriété optique qui change est une augmentation de la transmission optique dans le cas où la lecture d'un bit constitué par une marque physique formée sur le disque optique nécessite une transmission du faisceau laser jusqu'à cette marque physique. La couche non-linéaire est alors interposée sur le trajet du faisceau vers la marque physique. Le centre du faisceau laser va pouvoir traverser la couche jusqu'à la marque, du fait qu'en traversant la couche l'intensité de la lumière incidente la rend plus transparente, alors que la périphérie du faisceau ne va pas traverser car elle ne modifie pas suffisamment les indices optiques de la couche pour la rendre plus transparente. Tout se passe alors comme si on avait utilisé un faisceau focalisé sur un diamètre beaucoup plus petit que ce que permet sa longueur d'onde.

Diverses propositions théoriques ont été formulées pour mettre en oeuvre ces principes, mais aucune n'a donné lieu à un développement industriel. Le brevet US 5 153 873 rappelle la théorie. Le brevet US 5 381 391 donne l'exemple d'un film ayant des propriétés de réflectivité non-linéaires. Le brevet US 5 569 517 propose divers matériaux à changement de phase cristalline.

JP 03 292632 A décrit une structure de stockage optique d'informations comprenant un substrat pourvu de marques physiques et une couche de super-résolution (par ex. In-Sb) intercalée entre deux couches diélectriques de Si₃N₄.

Parmi les techniques qui offrent actuellement les plus grandes possibilités, il y a l'utilisation d'une couche d'oxyde de platine (PtOₓ) enserrée entre deux couches de composé de sulfure de zinc et d'oxyde de silicium, l'ensemble étant inséré entre deux couches de composé AglnSbTe ou GeSbTe et l'ensemble étant à nouveau inséré entre des couches de composé de sulfure de zinc et d'oxyde de silicium. Le matériau AglnSbTe ou GeSbTe présente des propriétés de changement de phase sous l'effet d'un éclairement laser intense. On trouvera des exemples dans Applied Physics letters vol. 83, N°9, Sept 2003 Jooho Kim et autres, "Super-Resolution by elliptical bubble formation with PtOx and AglnSbTe layers", ainsi que dans le Japanese Journal of Applied Physics vol. 43, N° 7B, 2004, Jooho Kim et autres "Signal Characteristics of Super-Resolution Near-Field Structure Disk in Blue Laser System", et dans la même revue, Duseop Yoon et autres, "Super-Resolution Read-Only Memory Disc Using Super-Resolution Near-Field Structure Technology". Voir aussi Vol. 45, N°2B, 2006, Hyunki Kim et autres "Random Signal Characteristics of Super Resolution Near Field Structure Read-Only Memory Disc".

Les structures décrites dans ces articles reposent principalement sur la constitution de bulles d'expansion de l'oxyde de platine, confinées entre les couches qui les enserrent. Ces bulles sont formées lors de l'écriture laser et elles peuvent être reconnues lors de la lecture, même avec un laser de lecture de longueur d'onde égale à plusieurs fois la dimension des bulles.

Mais ces structures sont difficiles à réaliser et le contrôle du volume des bulles est particulièrement délicat. Le réglage de la puissance laser pour obtenir l'effet de super-résolution en lecture est également particulièrement difficile, une puissance laser trop faible ne donnant aucun résultat et une puissance laser trop forte réduisant considérablement le nombre de cycles de lecture possible.

L'invention propose une structure beaucoup plus simple, plus facile à mettre en oeuvre, nécessitant des puissances laser de lecture raisonnables, et pouvant subir de nombreux cycles de lecture sans dégradation sensible du signal de lecture. La structure selon l'invention repose directement sur les propriétés non-linéaires de certains matériaux sans qu'il soit nécessaire de les soumettre à un régime d'expansion en bulles trop difficile à maîtriser.

Selon l'invention, on propose une structure de stockage optique d'informations à haute résolution, comprenant un substrat pourvu de marques physiques dont la configuration géométrique définit l'information enregistrée, une superposition de trois couches au-dessus des marques du substrat, et une couche de protection transparente au-dessus de cette superposition, la superposition comprenant une couche d'antimoniure d'indium ou de gallium insérée entre deux couches diélectriques d'un composé de sulfure de zinc et d'oxyde de silicium (ZnS-SiO₂), la couche d'antimoniure ayant une structure polycristalline avec une taille moyenne de grains cristallins comprise entre 5 et 50 nanomètres.

On a constaté que la présence des couches de ZnS-SiO₂ autour de cette couche d'antimoniure permettait de réduire considérablement la puissance laser de lecture nécessaire pour lire les informations en super-résolution avec un rapport signal/bruit satisfaisant. Or la question de la puissance de lecture est critique car, d'un côté, une puissance relativement élevée est nécessaire pour obtenir un effet de super-résolution par changement localisé de propriétés optiques, mais d'un autre côté une puissance élevée tend à détruire progressivement l'information enregistrée, limitant le nombre de cycles de lecture possible alors qu'on souhaite un nombre de cycles de lecture aussi élevé que possible.

L'épaisseur de couche d'antimoniure est proche de la taille des grains, de sorte que la couche est pratiquement constituée par une monocouche de grains cristallins juxtaposés latéralement et non empilés. L'épaisseur de la couche InSb ou GaSb est de préférence d'environ 10 à 50 nanomètres, et, de manière optimale, entre 20 et 30 nanomètres. Typiquement, la couche d'antimoniure a une épaisseur de l'ordre de 20 nanomètres et la taille des grains est voisine de 20 nanomètres.

On a constaté que cette granulométrie importante de la couche active d'antimoniure favorise la lecture des informations en super-résolution.

De préférence, le substrat est en polycarbonate, en matériau plastique, en polymère.

Les proportions atomiques d'antimoine dans le composé sont de préférence d'environ 45% à 55% ; la proportion d'indium ou de gallium est alors comprise entre 45% et le complément à 100% de la proportion d'antimoine. Un composé stoechiométrique In₅₀Sb₅₀ ou Ga₅₀Sb₅₀ convient bien, mais de petits écarts à la stoechiométrie sont acceptables.

Les couches diélectriques de ZnS-SiO₂ ont de préférence chacune une épaisseur comprise entre 20 et 100 nanomètres, et, de manière optimale, entre 50 et 70 nanomètres. La proportion atomique de ZnS et de SiO₂ est de préférence choisie dans la gamme entre ZnS_{85at%}-SiO_{2 15at%} (proportion 85/15) et ZnS_{70at%-}SiO_{2 30at%} (proportion 70/30).

Selon un aspect important de l'invention, on propose également d'ajouter à la couche active d'antimoniure d'indium ou de gallium des impuretés en pourcentage pouvant varier entre 1 et 15%, ces impuretés servant à réduire la mobilité électronique dans la couche. Ces impuretés peuvent être les suivantes : Tellure, Selenium, Soufre, Arsenic, Phosphore, Azote, Xenon, Fluor, Brome, Chlore, Iode.

L'invention est particulièrement applicable pour la lecture d'informations à partir d'un laser bleu, typiquement avec une longueur d'onde d'environ 400 nanomètres, les informations préenregistrées sur le disque optique pouvant alors avoir une dimension (largeur et longueur) de 100 nanomètres ou moins, c'est-à-dire quatre à cinq fois moins que la longueur d'onde de lecture. Mais l'invention est applicable aussi pour la lecture à partir d'un laser rouge (longueurs d'onde de 600 à 800 nanomètres), ce qui est très intéressant pour permettre la compatibilité avec les lecteurs de disque optiques classiques de résolution standard : un même lecteur peut lire des disques portant des informations de résolution standard et des disques portant des informations en super-résolution.

D'autres caractéristiques et avantages de l'invention apparaîtront à la lecture de la description détaillée qui suit et qui est faite en référence aux dessins annexés dans lesquels :
- la figure 1 représente la structure de stockage d'informations optiques selon l'invention ;
- la figure 2 représente une vue au microscope à force atomique d'un substrat dans lequel ont été préformées des marques de 100 nanomètres espacées de 100 nanomètres ;
- la figure 3 représente une courbe montrant une amélioration du signal et du rapport signal sur bruit après les premières lectures ;
- la figure 4 représente une structure dans laquelle des impuretés ont été mêlées à la couche d'antimoniure d'indium ou de gallium.

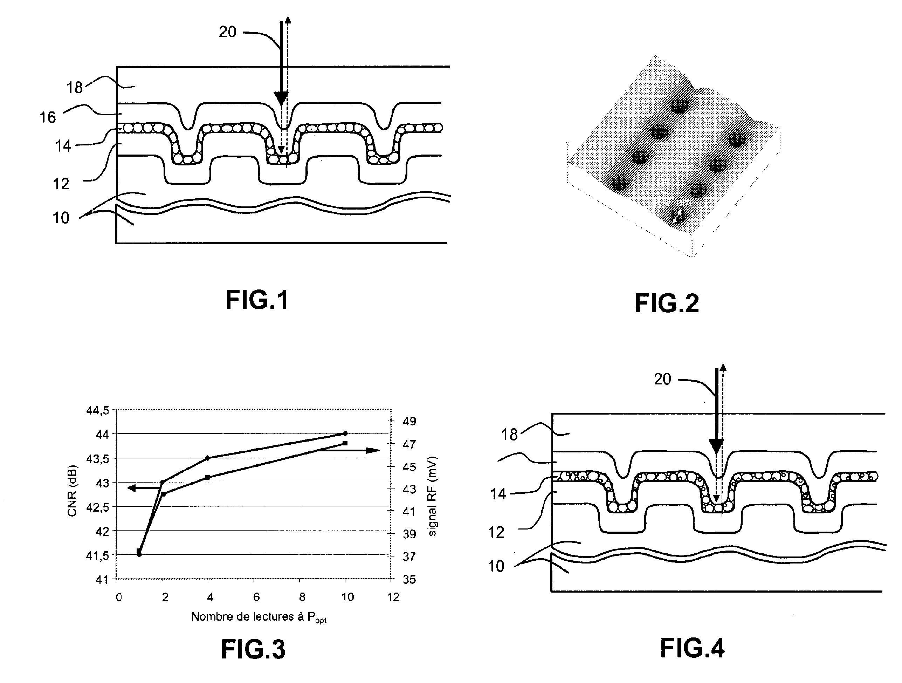

Sur la figure 1, on a représenté la structure générale du support de stockage optique d'informations selon l'invention. Il comprend un substrat 10, qui est de préférence un matériau organique, et notamment du polycarbonate classiquement utilisé pour des disques optiques. Le substrat sera en pratique en forme de disque plan et les informations sont classiquement inscrites dans le disque sur des pistes sensiblement concentriques ; un faisceau laser de lecture, symbolisé par la flèche 20, placé devant le disque, verra les informations défiler devant lui lors de la rotation du disque.

Le substrat 10 comporte des marques physiques définissant l'information enregistrée, et dans cet exemple, les marques physiques sont constituées sous forme d'un relief imprimé à la surface supérieure du substrat. Le relief est par exemple constitué de creux dont la largeur est à peu près fixe pour toutes les informations inscrites, mais dont la longueur et l'espacement, dans le sens de défilement des informations, définissent le contenu de l'information inscrite. La lecture des informations se fait par analyse de la phase du faisceau laser réfléchi par la structure, phase qui varie au début et à la fin du passage de chaque marque physique. Les creux peuvent être préenregistrés par pressage du polycarbonate ou du substrat plastique par exemple à l'aide d'un moule en nickel qui a été réalisé à partir d'outils de gravure à faisceaux d'électrons de très haute résolution.

La largeur, la longueur, l'espacement des marques physiques peuvent être inférieures à la résolution optique théorique du système optique de lecture qui servira à les lire. Typiquement, s'il s'agit d'un laser bleu de longueur d'onde 400 nanomètres environ, utilisé avec une optique de focalisation dont l'ouverture numérique est de 0,85, la limite physique théorique de résolution est de l'ordre de 120 nanomètres. Ici, les marques peuvent être préenregistrées avec une résolution, en longueur ou en espacement, inférieure à 80 nanomètres.

Dans le cas d'un disque optique classique, on recouvrirait le relief d'une simple couche d'aluminium, mais cette couche d'aluminium ne permettrait pas de détecter avec un laser bleu des marques de dimensions et d'espacement égal à 100 nanomètres.

Selon l'invention, on recouvre les marques d'une triple couche constituée dans l'ordre par une couche diélectrique 12 de composé ZnS-SiO₂ une couche 14 d'antimoniure d'indium (InSb) ou antimoniure de gallium (GaSb), et une couche diélectrique 16 de composé ZnS-SiO₂. L'ensemble est recouvert par une couche de protection transparente 18.

La couche 14 en InSb ou GaSb est une couche à propriétés optiques non linéaires, et on a constaté que le pouvoir de réflexion de la structure tri-couche, couche GaSb ou InSb encadrée par les deux couches diélectriques ZnS-SiO₂ pouvait augmenter très significativement lorsqu'elle est illuminée par un faisceau laser d'une puissance de 1 à 2 milliwatts (correspondant en pratique à une densité de puissance d'environ 7 milliwatts par micromètre carré).

A titre d'exemple, la couche inférieure 12 de Zns-SiO₂ a une épaisseur de 70 nanomètres, elle contient environ 80% de ZnS pour 20% de SiO₂ (en pourcentage atomique). La couche supérieure16 a la même composition et une épaisseur de 50 nanomètres. La couche intermédiaire est en InSb d'épaisseur 20 nanomètres et de composition sensiblement stoechiométrique. La couche d'InSb est fortement polycristalline, et la taille moyenne des grains est à peu près égale à l'épaisseur de la couche, ce qui est symbolisé sur la figure 1 par une constitution en monocouche de grains juxtaposés.

La figure 2 rappelle la manière dont peuvent être constituées les informations préenregistrées sur le substrat, avant dépôt de la superposition de trois couches 12, 14, 16 : trous borgnes de longueur et d'espacement variables. Dans cet exemple on a représenté un échantillon d'expérimentation avec des trous de 100 nanomètres espacés régulièrement de 100 nanomètres.

Les essais effectués ont montré que, aussi bien pour un laser bleu que pour un laser rouge, les épaisseurs optimales des couches de la structure selon l'invention sont les suivantes :
- couche inférieure de ZnS-SiO2 : environ 50 à 70 nanomètres ;
- couche GaSb ou InSb : environ 20 à 30 nanomètres ; la taille des grains cristallins est alors de préférence à peu près égale à 20 nanomètres en moyenne ;
- couche supérieure de ZnS-SiO₂ : environ 50 à 60 nanomètres.

La composition atomique préférée pour le composé ZnS-SiO₂ est d'environ 80% de ZnS pour 20% de SiO₂.

On a constaté de plus que l'efficacité de lecture des marques tendait à s'améliorer au fur et à mesure des lectures. La figure 3 représente deux courbes de mesure tracées en fonction du nombre de lectures effectuées à la puissance laser de lecture optimale pour la lecture en super-résolution ; la première (courbe inférieure, échelle de droite sur la figure) représente l'amplitude du signal périodique lu en retour : cette amplitude s'accroît sensiblement après quelques lectures ; la deuxième courbe (courbe supérieure, échelle de gauche) représente le rapport signal sur bruit CNR en décibel, qui s'accroît également après les premières lectures. On pense que le laser de lecture a une influence sur la croissance des grains cristallins de la couche d'antimoniure, et qu'il tend à renforcer la constitution de grains suffisamment gros, de quelques dizaines de nanomètres de diamètre.

Des mesures de diffraction spectroscopique de rayons X tendent à confirmer cette évolution : des pics spécifiques de diffraction apparaissent après quelques lectures (une dizaine), la finesse de ces pics tendant à montrer l'existence de grains de quelques dizaines de nanomètres de diamètre dans la couche d'antimoniure. Ces pics tendent à devenir plus fins au fur et à mesure des premières lectures du media d'enregistrement, tendant à montrer un accroissement de la taille des cristaux élémentaires (après une dizaine de lectures, on constate que les grains sont à peu près deux fois plus gros qu'après deux lectures).

Les premières lectures contribuent donc à cristalliser la couche d'antimoniure en lui donnant la granulométrie la plus favorable à la qualité de la lecture en super-résolution.

On peut encore améliorer la lecture en incorporant à la couche d'antimoniure des impuretés dont la fonction est de réduire la mobilité électronique entre grains polycristallins. Ces impuretés sont en quantité importante (1 à 15%) ; il ne s'agit donc pas de dopage de l'antimoniure mais d'incorporation d'un matériau supplémentaire dans la couche. La figure 4 représente symboliquement cette adjonction d'impuretés sous forme de petits grains supplémentaires disposés entre les grains d'InSb ou GaSb qui étaient seuls présents dans le cas de la figure 1. Les impuretés sont choisies dans la liste suivante : Te, Se, S, As, P, N, Xe, F, Br, CI, 1.

Le dépôt de la couche d'antimoniure d'indium ou de gallium est fait de préférence par pulvérisation cathodique à partir d'une cible comportant les matériaux voulus (typiquement In_{50%atomes}Sb_{50%atomes}). La pression de dépôt peut être d'environ 3.10⁻³ millibar et l'intensité de courant continu d'environ 80 mA, typiquement 78 mA.

Les couches de ZnS-SiO₂ peuvent être déposés par pulvérisation cathodique ou par dépôt en phase vapeur assisté par plasma.

## Revendications

1. Structure de stockage optique d'informations à haute résolution, comprenant un substrat (10) pourvu de marques physiques dont la configuration géométrique définit l'information enregistrée, une superposition de trois couches (12, 14, 16) au-dessus des marques du substrat, et une couche de protection transparente(18) au-dessus de cette superposition, la superposition comprenant une couche d'antimoniure d'indium ou de gallium (14) insérée entre deux couches diélectriques (12, 16) d'un composé de sulfure de zinc et d'oxyde de silicium (ZnS-SiO₂), la couche d'antimoniure ayant une structure polycristalline avec une taille moyenne de grains cristallins comprise entre 5 et 50 nanomètres.

2. Structure selon la revendication 1, **caractérisée en ce que** les proportions atomiques d'antimoine dans la couche d'antimoniure (14) sont de 45% à 55%, la proportion d'indium ou de gallium étant comprise entre 45% et le complément à 100% de la proportion d'antimoine

3. Structure selon la revendication 2, **caractérisée en ce que** la couche d'antimoniure (14) est une couche stoechiométrique InSb ou GaSb.

4. Structure selon l'une des revendications 1 à 3, **caractérisée en ce que** l'épaisseur de la couche d'antimoniure InSb ou GaSb est de 10 à 50 nanomètres et la taille moyenne des grains de cristal est à peu près égale à cette épaisseur.

5. Structure selon la revendication 4, **caractérisée en ce que** l'épaisseur de la couche d'antimoniure InSb ou GaSb est de 20 à 30 nanomètres et la taille moyenne des grains de cristal est d'environ 20 nanomètres.

6. Structure selon l'une des revendications 1 à 5, **caractérisée en ce que** les couches diélectriques de ZnS-SiO₂ ont chacune une épaisseur comprise entre 20 et 100 nanomètres.

7. Structure selon la revendication 6, **caractérisée en ce que** la couche inférieure (12) de ZnS-SiO₂ recouvrant les marques du substrat a une épaisseur de 50 à 70 nanomètres.

8. Structure selon l'une des revendications 6 et 7, **caractérisée en ce que** la couche supérieure (16) de ZnS-SiO₂ a une épaisseur de 50 à 60 nanomètres.

9. Structure selon l'une des revendications 1 à 8, **caractérisée en ce que** la proportion atomique de ZnS et de SiO₂ est choisie dans la gamme entre ZnS_{85at%}-SiO_{2 15at%} (proportion 85/15) et ZnS_{70at%}-SiO_{2 30at%} (proportion 70/30).

10. Structure selon l'une des revendications 1 à 9, **caractérisée en ce que** la couche active d'antimoniure d'indium ou de gallium comprend en outre des impuretés en pourcentage pouvant varier entre 1 et 15%, ces impuretés servant à réduire la mobilité électronique dans la couche et étant prises dans le groupe suivant : Tellure, Selenium, Soufre, Arsenic, Phosphore, Azote, Xenon, Fluor, Brome, Chlore, Iode.

11. Application de la structure selon l'une des revendications précédentes à la fabrication d'un disque optique destiné à être lu en super-résolution par un lecteur à laser bleu, certaines des marques physiques ayant une longueur et une largeur inférieures à 100 nanomètres.

## Claims

1. A structure for the optical storage of high-resolution information, comprising a substrate (10) with physical marks the geometrical configuration of which defines the recorded information, a stacking of three layers (12, 14, 16) above the substrate marks, and a transparent protective layer (18) above this stack, the stack comprising a layer of indium or gallium antimonide (14) inserted between two dielectric layers (12, 16) with a zinc sulphide and silicon oxide compound (ZnS-SiO₂), the antimonide layer having a polycrystalline structure with an average crystal grain size of between 5 and 50 nanometres.

2. The structure according to claim 1, **characterised in that** the atom proportions of the antimony in the antimonide layer (14) are between 45% and 55%, the indium or gallium proportion being between 45% and the balance of the proportion of antimony to 100%.

3. The structure according to claim 2, **characterised in that** the antinomide layer (14) is an InSb or GaSb stoichiometric layer.

4. The structure according to one of claims 1 to 3, **characterised in that** the thickness of the InSb or GaSb antimonide layer is between 10 and 50 nanometers and the average size of the crystal grains is approximately equal to this thickness.

5. The structure according to claim 4, **characterised in that** the thickness of the InSb or GaSb antimonide layer is between 20 and 30 nanometers and the average size of the crystal grains is approximately 20 nanometers.

6. The structure according to one of claims 1 to 5, **characterised in that** the ZnS-SiO₂ dielectric layers are each between 20 and 100 nanometers thick.

7. The structure according to claim 6, **characterised in that** the lower layer (12) of ZnS-SiO₂ covering the substrate marks is between 50 and 70 nanometers thick.

8. The structure according to one of claims 6 and 7, **characterised in that** the upper layer (16) of ZnS-SiO₂ is between 50 and 60 nanometers thick.

9. The structure according to one of claims 1 to 8, **characterised in that** the atom proportion of ZnS and SiO₂ is chosen from a range between ZnS_{85at%}-SiO_{2 15at%} (85/15 ratio) and ZnS_{70at%}-SiO_{2 30at%} (70/30 ratio).

10. The structure according to one of claims 1 to 9, **characterised in that** the active indium or gallium antimonide layer further comprises impurities, the percentage of which may vary between 1 and 15%, serving to reduce the electronic mobility in the layer and being selected from the following group: Tellurium, Selenium, Sulphur, Arsenic, Phosphorus, Nitrogen, Xenon, Fluorine, Bromine, Chlorine and Iodine.

11. An application of the structure, according to one of the previous claims, in the manufacture of an optical disk designed to be read in super resolution by a blue laser reader, some of the physical marks having a length and width below 100 nanometers.

## Patentansprüche

1. Struktur zum optischen Speichern von Informationen mit hoher Auflösung, die Folgendes umfasst: ein Substrat (10), das mit physischen Markierungen versehen ist, deren geometrische Konfiguration die aufgezeichneten Informationen definiert, eine Übereinanderlagerung von drei Schichten (12, 14, 16) über den Markierungen des Substrats, und eine transparente Schutzschicht (18) über dieser Übereinanderlagerung, wobei die Übereinanderlagerung eine Indium- oder Galliumantimonidschicht (14) umfasst, die zwischen dielektrischen Schichten (12, 16) einer Zinksulfid- und Siliciumoxidverbindung (ZnS-SiO₂) eingefügt ist, wobei die Antimonidschicht eine polykristalline Struktur mit einer mittleren kristallinen Korngröße zwischen 5 und 50 Nanometern hat.

2. Struktur nach Anspruch 1, **dadurch gekennzeichnet, dass** die atomaren Antimonanteile in der Antimonidschicht (14) 45% bis 55 % betragen, wobei der Indium- oder Galliumanteil zwischen 45% und der Differenz zwischen dem Antimonanteil und 100% liegt.

3. Struktur nach Anspruch 2, **dadurch gekennzeichnet, dass** die Antimonidschicht (14) eine stöchiometrische InSb- oder GaSb-Schicht ist.

4. Struktur nach einem der Ansprüche 1 bis 3, **dadurch gekennzeichnet, dass** die Dicke der InSb- oder GaSb-Antimonidschicht 10 bis 50 Nanometer beträgt und die mittlere Größe der Kristallkörner etwa gleich dieser Dicke ist.

5. Struktur nach Anspruch 4, **dadurch gekennzeichnet, dass** die Dicke der InSb- oder GaSb-Antimonidschicht 20 bis 30 Nanometer beträgt und die mittlere Größe der Kristallkörner etwa 20 Nanometer beträgt.

6. Struktur nach einem der Ansprüche 1 bis 5, **dadurch gekennzeichnet, dass** die dielektrischen ZnS-SiO₂-Schichten jeweils eine Dicke zwischen 20 und 100 Nanometern haben.

7. Struktur nach Anspruch 6, **dadurch gekennzeichnet, dass** die die Markierungen des Substrats bedeckende untere ZnS-SiO₂-Schicht (12) eine Dicke von 50 bis 70 Nanometer hat.

8. Struktur nach einem der Ansprüche 6 und 7, **dadurch gekennzeichnet, dass** die obere ZnS-SiO₂-Schicht (16) eine Dicke von 50 bis 60 Nanometer hat.

9. Struktur nach einem der Ansprüche 1 bis 8, **dadurch gekennzeichnet, dass** der atomare Anteil von ZnS und SiO₂ aus einem Bereich zwischen ZnS_{85at%}-SiO_{2 15at%} (Verhältnis 85/15) und ZnS_{70at%}-SiO_{2 30at%} (Verhältnis 70/30) ausgewählt ist.

10. Struktur nach einem der Ansprüche 1 bis 9, **dadurch gekennzeichnet, dass** die aktive Indium- oder Galliumantimonidschicht ferner Verunreinigungen umfasst, deren Prozentanteil zwischen 1 und 15% variieren kann, um die Elektronenbeweglichkeit in der Schicht zu reduzieren, und die ausgewählt sind aus der folgenden Gruppe: Tellur, Selen, Schwefel, Arsen, Phosphor, Stickstoff, Xenon, Fluor, Brom, Chlor und Iod.

11. Anwendung der Struktur nach einem der vorherigen Ansprüche bei der Herstellung einer Bildplatte, die so ausgelegt ist, dass sie von einem blauen Laserleser in superhoher Auflösung gelesen werden kann, wobei einige der physischen Markierungen eine Länge und Breite unter 100 Nanometern haben.
